# EUROPÄISCHE PATENTSCHRIFT

(11) **EP 1 520 756 B1**
(45) Veröffentlichungstag und Bekanntmachung des Hinweises auf die Patenterteilung: **21.02.2007**
(21) Anmeldenummer: 04090364.3
(22) Anmeldetag: 20.09.2004
(51) Int. Cl.: B60R 22/18

(54) **Gurtumlenkeinrichtung für einen Sicherheitsgurt eines Kraftfahrzeugs**
Belt guide for motor vehicle safety belt
Renvoi de ceinture de sécurité pour véhicule automobile

(30) Priorität: 01.10.2003 DE 10346172
(43) Veröffentlichungstag der Anmeldung: 06.04.2005
(73) Patentinhaber: TAKATA - PETRI AG, 63743 Aschaffenburg (DE)
(72) Erfinder: Bahnmaier, Albert, Dr., 89171 Illerkirchberg (DE); Mautsch, Jürgen, 89165 Dietenheim (DE); Lindau, Markus, 89281 Altenstadt (DE); Glinka, Oliver, 89081 Ulm (DE)
(74) Vertreter: Fischer, Uwe

(56) Entgegenhaltungen:
- DE-A1- 10 103 319
- US-A- 4 147 387
- US-A- 5 139 282
- US-A- 5 599 070

## Beschreibung

Die Erfindung bezieht sich auf eine Gurtumlenkeinrichtung für einen Sicherheitsgurt eines Kraftfahrzeugs.

Aus der deutschen Offenlegungsschrift DE 101 03 319 A1 ist eine Gurtumlenkrichtung mit einer Energieabsorbtionseinheit beschrieben. Wird im Falle eines Fahrzeugunfalls der Sicherheitsgurt durch den Fahrzeugsassen ausgelenkt, so wird auf die Umlenkeinrichtung eine erhebliche Zugkraft ausgeübt. Um die auf den Fahrzeuginsassen wirkenden Rückhaltekräfte zu begrenzen, ist bei der vorbekannten Gurtumlenkeinrichtung die Energieabsorbtionseinheit derart ausgestaltet, dass sie ein Nachgeben des Sicherheitsgurtes erlaubt; dies geschieht konkret in der Weise, dass ein Umlenkelement der Gurtumlenkeinrichtung unter Deformation der das Umlenkelement haltenden Haltelemente derart verschoben bzw. bewegt wird, dass es zu einer "Gurtverlängerung" für den Fahrzeuginsassen kommt. Um die beschriebene Energieabsorbtion zu ermöglichen ist die vorbekannte Gurtumlenkeinrichtung mehrteilig aufgebaut.

Aus der US-Patentschrift 5,139,282 ist eine Gurtumlenkeinrichtung mit einem Umlenkelement beschrieben, das mittels einer Schraube an der Fahrzeugkarosserie schwenkbar bzw. drehbar befestigt ist. Dem Umlenkelement ist ein Federelement zugeordnet, das auf den Sicherheitsgurt eine vorgegebene Vorspannkraft ausübt, die den Sicherheitsgurt gegen den Fahrzeuginsassen drückt. Auf Grund der schwenkbaren Lagerung des Umlenkelements an der Fahrzeugkarosserie kann sich das Umlenkelement bei einer Bewegung des Fahrzeuginsassen drehen bzw. verschwenken, so dass sich die Position des Sicherheitsgurtes relativ zum Fahrzeuginsassen verändern kann. Im Falle eines Fahrzeugunfalls kann dieses Mitschwenken des Umlenkelementes von Nachteil sein, weil es bei Erreichen eines kritischen Schwenkwinkels zu einem Verklemmen bzw. Verdrehen des Sicherheitsgurtes am Umlenkelement kommen kann. Die Funktion des Sicherheitsgurtes kann dadurch beeinträchtigt werden.

Der Erfindung liegt die Aufgabe zugrunde, eine Gurtumlenkeinrichtung für einen Sicherheitsgurt eines Kraftfahrzeugs anzugeben, die einen einfachen und damit kostengünstigen Aufbau aufweist und die gleichzeitig ein hohes Maß an Sicherheit für den Fahrzeuginsassen auch im Falle eines Fahrzeugunfalls gewährleistet.

Diese Aufgabe wird erfindungsgemäß durch eine Gurtumlenkeinrichtung mit den Merkmalen gemäß Patentanspruch 1 gelöst. Vorteilhafte Ausgestaltungen der Erfindung sind in Unteransprüchen angegeben.

Danach ist erfindungsgemäß eine Gurtumlenkeinrichtung für einen Sicherheitsgurt vorgesehen, bei der ein einstückiger Haltekörper vorhanden ist. Der einstückige Haltekörper weist mindestens einen Haltepunkt auf, an dem ein Umlenkelement gehalten wird; das Umlenkelement bildet eine Umlenkachse, um die der Sicherheitsgurt des Kraftfahrzeugs umgelenkt wird. Der Haltekörper ist erfindungsgemäß darüber hinaus derart ausgeformt, dass er eine Gurtumlenkkante bildet, um die der Sicherheitsgurt des Kraftfahrzeugs ein weiteres Mal, also zusätzlich, umgelenkt wird. Die Umlenkkante des Haltekörpers steht dabei zu der Umlenkachse des Umlenkelements in einem spitzen Winkel. Der erfindungsgemäße Haltekörper weist darüber hinaus mindestens einen Befestigungspunkt auf, der eine starre Montage des Haltekörpers an der Karosserie des Kraftfahrzeugs ermöglicht.

Ein wesentlicher Vorteil der erfindungsgemäßen Gurtumlenkeinrichtung besteht darin, dass diese auch im Falle eines Fahrzeugunfalls ein zuverlässiges "Funktionieren" des Sicherheitsgurtes gewährleistet; insbesondere ein Festklemmen oder Verdrehen bzw. "Umschlagen" des Sicherheitsgurtes an dem Umlenkelement der Gurtumlenkeinrichtung kann nicht auftreten. Dies wird erfindungsgemäß dadurch erreicht, dass das Umlenkelement von dem einstückigen Haltekörper gehalten wird, der selbst starr an der Karosserie des Kraftfahrzeugs montiert ist. Ein Verschwenken oder ein Verdrehen des Umlenkelements relativ zur Karosserie kann bei der erfindungsgemäßen Gurtumlenkeinrichtung - im Unterschied beispielsweise zu der verschwenkbaren Gurtumlenkeinrichtung gemäß der eingangs genannten US-Patentschrift - somit nicht auftreten. Entsprechendes gilt für die Gurtumlenkkante, die den Sicherheitsgurt des Kraftfahrzeugs zusätzlich in Richtung Fahrzeuginsassen umlenkt; denn die Gurt-Umlenkkante ist durch die Formgebung des Haltkörpers gebildet, der - wie bereits ausgeführt - starr an der Karosserie befestigt ist. Zusammengefasst wird mit der erfindungsgemäßen Gurtumlenkeinrichtung somit ein hohes Maß an Sicherheit für den Fahrzeuginsassen erreicht, weil ein Verschwenken bzw. ein Verdrehen des die Umlenkung des Sicherheitsgurtes bewirkenden Haltekörpers auf Grund der starren Montage an der Karosserie des Kraftfahrzeuges zuverlässig verhindert wird.

Ein weiterer wesentlicher Vorteil der erfindungsgemäßen Gurtumlenkeinrichtung besteht in ihrem kostengünstigen Aufbau, da der "zentrale" Haltekörper der Gurtumlenkeinrichtung, der erfindungsgemäß alle wesentlichen Funktionen der Gurtumlenkeinrichtung bereitstellt - einstückig ausgebildet ist. Auf Grund der einstückigen Ausbildung des Haltekörpers sind zusätzliche Montageschritte - bezüglich des Haltekörpers - überflüssig, wodurch die Gesamtmontage der Gurtumlenkeinrichtung einfach und kostengünstig gehalten wird.

Ein dritter wesentlicher Vorteil der erfindungsgemäßen Gurtumlenkeinrichtung ist darin zu sehen, dass die Gurtumlenkeinrichtung zum Umlenken des Sicherheitsgurtes zwei separate "Umlenkeinrichtungen" aufweist, nämlich einerseits das Umlenkelement und andererseits die Umlenkkante. Aufgrund der Anordnung der Umlenkkante in einem spitzen Winkel zur Umlenkachse des Umlenkelementes ist stets gewährleistet, dass trotz der starren Montage des Haltekörpers an der Karosserie und damit trotz der - im Gegensatz zu der genannten US-Patentschrift - nicht "nachführbaren" Ausrichtung der Umlenkachse des Umlenkelements stets eine optimale Ausrichtung des Sicherheitsgurtes zum Fahrzeuginsassen vorhanden ist. Denn auf Grund des spitzen Winkels zwischen der Umlenkachse und der Umlenkkante ist sichergestellt, dass der Sicherheitsgurt nach dem Umlenken in Richtung Fahrzeuginsassen derart "verkippt" ist, dass selbst im Falle eines Fahrzeugunfalls ein Verdrehen bzw. Umschlagen des Sicherheitsgurtes in der Gurtumlenkeinrichtung zuverlässig vermieden wird.

Besonders einfach und damit vorteilhaft lässt sich der einstückige Haltekörper der Gurtumlenkeinrichtung an der Karosserie des Kraftfahrzeugs befestigen, wenn der bzw. die Befestigungspunkte durch Ösen, Haken oder Flansche gebildet sind.

Bevorzugt weist der einstückige Haltekörper zumindest zwei mit Abstand zueinander bzw. "beabstandet" angeordnete Befestigungspunkte auf; die Befestigungspunkte sind dabei derart an dem Haltekörper angeformt, dass der übrige Bereich des Haltekörpers - beispielsweise also der Mittenbereich zwischen den Befestigungspunkten - nach der Montage des Haltekörpers an der Karosserie zumindest teilweise einen vorgegebenen Abstand zur Karosserie aufweist. Mit anderen Worten wird also durch die zumindest zwei beabstandet angeordneten Befestigungspunkte eine Art "Brücke" durch den Haltekörper gebildet. Der mittlere Brückenbereich, der einen Abstand zur Karosserie aufweist, bildet damit einen "Deformationsbereich" der in Kraftfahrzeug-Y-Richtung Energie aufnehmen kann. Wird die Gurtumlenkeinrichtung beispielsweise im Bereich der B-Säule eines Kraftfahrzeugs angebracht, so befindet sich diese üblicherweise in Schulter- bzw. Kopfhöhe des Kraftfahrzeuginsassen. Im Falle eines Fahrzeugunfalls kann es nun passieren, dass der Kopf des Fahrzeuginsassen gegen die Gurtumlenkeinrichtung geschleudert wird und somit auf dieser auftrifft. Um nun schwerste Verletzungen bzw. den Tod des Fahrzeuginsassen zu vermeiden, ist die beschriebene "Brückenkonstruktion" vorgesehen, die ein Nachgeben des Mittenbereichs des einstückigen Haltekörpers ermöglicht, da unter Deformation des Haltekörpers der Mittenbereich bzw. mittlere Brückenbereich auf die Karosserie gedrückt werden kann. Durch diese Deformation wird kinetische Energie "umgewandelt", so dass der Aufschlag des Kopfes des Fahrzeuginsassen zumindest etwas gedämpft wird. Um diese Energieaufnahme gewährleisten zu können, ist der Mittenbereich zwischen den Befestigungspunkten vorzugsweise in Y-Richtung bzw. in Karosserie-Richtung zumindest geringfügig deformierbar.

Um zu vermeiden, dass der Sicherheitsgurt beim Umlenken an der Umlenkkante des Haltekörpers vorzeitig "abgenutzt" wird, ist die durch die Formgebung des Haltekörpers gebildete Gurtumlenkkante vorzugsweise zumindest in dem mit dem Sicherheitsgurt zusammenwirkenden Bereich abgerundet, so dass die Reibung zwischen der Gurtumlenkkante und dem Sicherheitsgurt minimiert wird. Das Abrunden der Umlenkkante kann beispielsweise durch "Umbördeln" oder direktes "Formen" erfolgen.

Besonders einfach und damit vorteilhaft lässt sich die Gurtumlenkkante durch eine Längskante eines Öffnungsschlitzes bzw. eines Gurt-Austrittsschlitzes im Haltekörper ausbilden. Dieser Gurt-Austrittsschlitz sollte - aus den genannten Gründen - zumindest in seinem mit dem Sicherheitsgurt zusammenwirkenden Bereich umgebördelt sein, um die Reibung zwischen dem Sicherheitsgurt und der Gurtumlenkkante so gering wie möglich zu halten.

Darüber hinaus wird es als vorteilhaft angesehen, wenn der spitze Winkel zwischen der Umlenkachse des Umlenkelementes und der Gurtumlenkkante im Bereich zwischen 20° und 70° liegt, da bei einer solchen Winkelwahl eine besonders gute Ausrichtung des Sicherheitsgurtes relativ zum Fahrzeuginsassen sichergestellt ist. Besonders bevorzugt ist ein Winkelbereich zwischen 35° und 55°, da ein solcher Winkelbereich bei den meisten Kraftfahrzeugmodellen eine optimale relative Lage bzw. Ausrichtung des Sicherheitsgurtes relativ zum Fahrzeuginsassen gewährleistet. Der spitze Winkel kann beispielsweise ungefähr 45° betragen.

Das Umlenkelement kann besonders einfach und damit vorteilhaft beispielsweise durch eine drehbar gelagerte Umlenkrolle gebildet sein, die mittels eines Stiftes am einstückig ausgebildeten Haltekörper befestigt ist. Bei dem Stift kann es sich beispielsweise um einen Metallstift, insbesondere einen Stahlstift handeln.

Um eine zuverlässige Befestigung der Umlenkrolle an dem Haltekörper auch bei den im Falle eines Fahrzeugunfalls auftretenden großen Kräften zu gewährleisten, wird es als vorteilhaft angesehen, wenn der Stift an zumindest zwei an dem Haltekörper ausgebildeten Haltepunkte gehalten wird. Der Stift kann beispielsweise in den Haltepunkten auch drehbar gelagert sein.

Alternativ zu einer drehbar gelagerten Umlenkrolle kann das Umlenkelement auch durch einen Umlenkstab gebildet sein, der an dem Haltekörper einstückig angeformt ist. Ebenso kann das Umlenkelement auch durch eine einstückig am Haltekörper ausgebildete, weitere Umlenkkante realisiert sein. Der Vorteil eines Umlenkstabes oder einer "weiteren" Umlenkkante besteht darin, dass diese bereits bei der Herstellung des einstückigen Haltekörpers "mithergestellt" werden kann, so dass eine zusätzliche Montage eines Stiftes und einer Umlenkrolle vermieden wird. Nachteilig sind ein Umlenkstab oder eine weitere Umlenkkante im Vergleich zu einer drehbar gelagerten Umlenkrolle jedoch in der Hinsicht, dass größere Reibungskräfte auf den Sicherheitsgurt ausgeübt werden, so dass der Benutzungskomfort etwas geringer ist als im Falle einer drehbar gelagerten Umlenkrolle, bei der auf Grund der drehbaren Lagerung nur eine geringe Reibung auftritt und somit ein besonders leichtes Auslenken bzw. Bewegen des Sicherheitsgurtes durch den Fahrzeuginsassen möglich ist.

Um eine sichere Führung des Sicherheitsgurtes im Haltekörper zu gewährleisten, wird es darüber hinaus als vorteilhaft angesehen, wenn der Haltekörper zusätzlich einen Gurteinführschlitz aufweist, der vorzugsweise parallel zur Umlenkachse des Umlenkelements angeordnet ist. Der Sicherheitsgurt wird dann durch den Gurteinführschlitz in den Bereich des Haltekörpers eingeführt und vom Gurteinführschlitz zu dem Umlenkelement geleitet; von dem Umlenkelement wird der Sicherheitsgurt in Richtung zur Gurtumlenkkante umgelenkt. Durch die Gurtumlenkkante wird der Sicherheitsgurt anschließend in Richtung Fahrzeuginsassen ein weiteres Mal umgelenkt, so dass der Sicherheitsgurt den Bereich des Haltekörpers wieder verlässt.

Gemäß einer besonders bevorzugten Ausgestaltung der Erfindung ist vorgesehen, dass der einstückige Haltekörper durch ein Stanz-Biegeteil, beispielsweise durch ein Stanz-Biegeteil aus Blech gebildet ist. Durch Stanzen und Biegen lässt sich der einstückige Haltekörper besonders einfach und damit kostengünstig herstellen.

Darüber hinaus wird auch der oben erläuterte Gurtaustrittsschlitz vorzugsweise durch Ausstanzen aus dem Stanz-Biegeteil bzw. aus dem Blechteil gebildet. Die Befestigungspunkte werden dann bevorzugt durch Abbiegen von Randbereichen, und zwar in Montagerichtung zur Fahrzeugkarosserie hin, gebildet. In entsprechender Weise wird auch der Gurteinführschlitz vorzugsweise in den einstückigen Haltekörper eingestanzt.

Anstelle eines Stanz-Biegeteils kann der einstückige Haltekörper auch durch ein Kunststoff-Spritzgussteil oder durch ein Aluminiumgussteil gebildet sein.

Der Erfindung liegt außerdem die Aufgabe zugrunde, ein einfaches und kostengünstiges Verfahren zum Herstellen einer Gurtumlenkeinrichtung für einen Sicherheitsgurt eines Kraftfahrzeugs anzugeben, die einen einfachen und damit kostengünstigen Aufbau aufweist und die gleichzeitig ein hohes Maß an Sicherheit für den Fahrzeuginsassen auch im Falle eines Fahrzeugunfalls gewährleistet.

Diese Aufgabe wird erfindungsgemäß durch ein Verfahren zum Herstellen einer Gurtumlenkeinrichtung gelöst, bei dem ein einstückiger Haltekörper durch ein Blechteil gebildet wird, in dem in den Mittenbereich des Blechteils ein Gurtaustrittsschlitz eingestanzt wird und/oder Befestigungspunkte durch Abbiegen von Randbereichen des Blechteils gebildet werden und/oder ein Gurt-Einführschlitz in den einstückigen Haltekörper eingestanzt wird.

Bezüglich der Vorteile des erfindungsgemäßen Verfahrens wird auf die obigen Ausführungen im Zusammenhang mit der erfindungsgemäßen Gurtumlenkeinrichtung verwiesen, da diese für das Verfahren entsprechend gelten.

Zur Erläuterung der Erfindung zeigen
- Figur 1: eine Sicherheitsgurtvorrichtung mit einem Ausführungsbeispiel für eine erfindungsgemäße Gurtumlenkeinrichtung,
- Figur 2: das Ausführungsbeispiel für die Gurtumlenkeinrichtung gemäß der Figur 1 im Detail im zerlegten Zustand bzw. vor der Montage und
- Figur 3: die Gurtumlenkeinrichtung gemäß den Figuren 1 und 2 im zusammengesetzten Zustand.

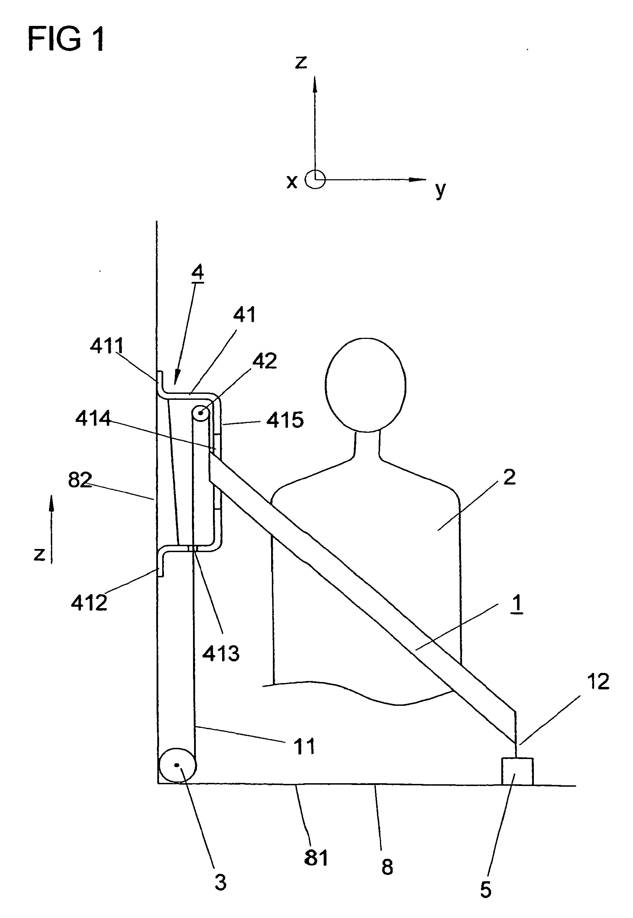

In der Figur 1 erkennt man eine Sicherheitsgurtvorrichtung mit einem Sicherheitsgurt 1 für einen Fahrzeuginsassen 2. Der Gurt 1 ist mit seinem einem Gurtende 11 auf einer Gurtrolle 3 aufgerollt. Die Gurtrolle 3 ist im Bodenbereich 81 der Fahrzeugkarosserie 8 mit der Karosserie 8 fest verbunden. Die Gurtrolle 3 weist einen Drehmoment-Erzeugungsmechanismus auf, der in Gurtaufwickelrichtung vorgespannt ist und den Sicherheitsgurt 1 strafft. Die Gurtrolle 3 weist darüber hinaus eine Abwickelsperranordnung auf, welche bei versuchtem, schnellem Auszug des Sicherheitsgurtes 1 und/oder bei einem unfallbedingten Beschleunigen des Abwickelns des Sicherheitsgurtes den Sicherheitsgurt 1 gegen die Kraft des Drehmoment-Erzeugungsmechanismus sperrt.

Der Sicherheitsgurt 1 erstreckt sich von seinem mit der Gurtrolle 3 in Verbindung stehenden Ende 11 über eine Gurtumlenkeinrichtung 4 zu einem Gurtschloss 5, an dem das andere Ende 12 des Sicherheitsgurtes lösbar fixiert bzw. gehalten ist.

Die Gurtumlenkeinrichtung 4 weist einen einstückigen Haltekörper 41 auf, der an einem oberen Befestigungspunkt 411 und an einem unteren Befestigungspunkt 412 im Bereich der B-Säule 82 an der Fahrzeugkarosserie 8 starr befestigt ist. Die Befestigungshöhe der Gurtumlenkeinrichtung 4 bzw. des einstückigen Haltekörpers 41 ist dabei derart gewährt, dass der Sicherheitsgurt 1 ungefähr in Schulterhöhe des Fahrzeuginsassen 2 umlenkt wird.

Der Sicherheitsgurt 1 erstreckt sich von seinem einen Ende 11 entlang der Fahrzeug-Z-Richtung entlang der B-Säule 82 nach oben und gelangt durch einen Gurteinführschlitz 413 in die Gurtumlenkeinrichtung 4 hinein. Durch ein oberes Umlenkelement 42 der Gurtumlenkeinrichtung 4 wird der Sicherheitsgurt 1 derart umgelenkt, dass er nun entgegen der Fahrzeug-Z-Richtung wieder quasi senkrecht nach unten verläuft. Durch einen Gurtaustrittsschlitz 414 des einstückigen Haltekörpers 41 verlässt der Sicherheitsgurt 1 die Gurtumlenkeinrichtung 4 und wird über den Schulter- und Brustbereich des Fahrzeuginsassen 2 zum Gurtschloss 5 geführt.

Wie sich in der Figur 1 erkennen lässt, ist der Gurtaustrittsschlitz 414 derart ausgestaltet, dass der Sicherheitsgurt 1 im Brustbereich des Fahrzeuginsassen 2 um ca. 20° bis 70° verkippt wird, so dass der Sicherheitsgurt 1 in optimaler Lage auf dem Fahrzeuginsassen 2 aufliegt.

Wie sich der Figur 1 darüber hinaus entnehmen lässt, ist ein Mittenbereich 415 des Haltekörpers 41 geringfügig beabstandet zur B-Säule 81 der Fahrzeugkarosserie 8 angeordnet; dies wird konkret durch die beiden Befestigungspunkte 411 und 412 erreicht, die derart an dem Haltekörper 41 angebracht sind, dass der Mittenbereich 415 einen vorgegebenen Abstand Δx zur B-Säule 81 aufweist.

Der Abstand Δx zwischen dem Mittenbereich 415 und der Fahrzeug-B-Säule 81 kommt im Falle eines Fahrzeugunfalls zum Tragen. Wird nämlich im Falle eines Fahrzeugunfalls der Kopf des Fahrzeuginsassen 2 gegen die Gurtumlenkeinrichtung 4 bzw. gegen den Haltkörper 41 geschleudert, so kann der Mittenbereich 415 des Haltekörpers 41 geringfügig nachgeben, da er sich in Richtung der Fahrzeug-B-Säule 82 auf Grund des Abstandes Δx deformieren lässt. Ein tödlicher Aufschlag des Kopfes des Fahrzeuginsassen 2 auf der Gurtumlenkeinrichung 4 kann somit verhindert werden.

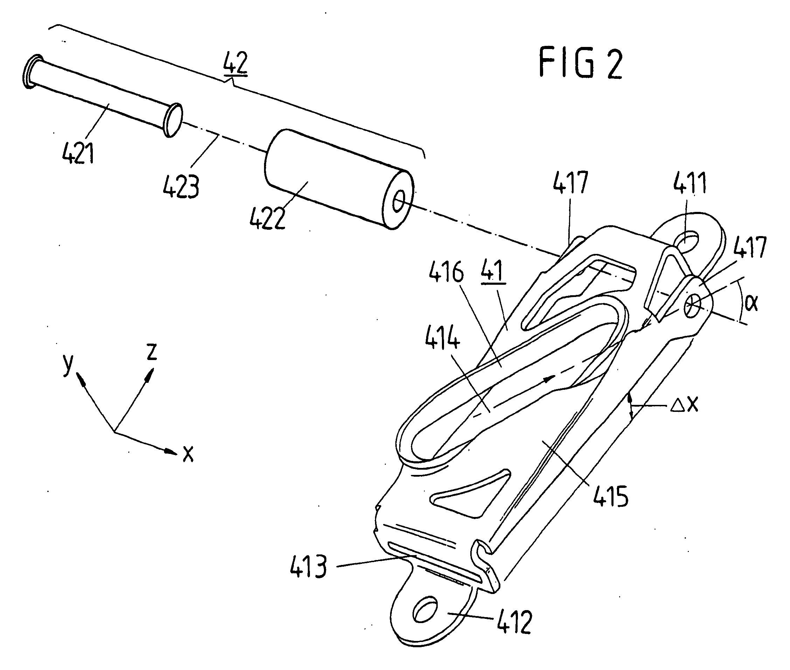

In der Figur 2 ist die Gurtumlenkeinrichtung 4 gemäß der Figur 1 im Detail - im noch unmontierten Zustand - gezeigt. Man erkennt den Haltekörper 41 mit seinem oberen Befestigungspunkt 411 und mit seinem unteren Befestigungspunkt 412. Bei dem Ausführungsbeispiel gemäß den Figuren 1 bis 3 sind die beiden Befestigungspunkte 411 und 412 jeweils durch Ösen gebildet. Alternativ können einer der beiden Befestigungspunkte oder auch beide durch Haken oder Befestigungsflansche bebildet sein. Beispielsweise kann der obere Befestigungspunkt 411 durch die in der Figur 2 gezeigte Öse gebildet sein, wohingegen der untere Befestigungspunkt 412 durch zwei Befestigungshaken ersetzt ist.

In der Figur 2 erkennt man darüber hinaus den Abstand Δx zwischen dem Mittenbereich 415 und der durch die beiden Befestigungspunkte 411 und 412 auf der B-Säule 81 der Kraftfahrzeugkarosserie 8 gebildeten Befestigungsfläche des Haltekörpers 41.

In der Figur 2 lässt sich darüber hinaus der Gurteinführschlitz 413 und der Gurtaustrittsschlitz 414 erkennen, die jeweils durch Ausstanzen in den durch ein einteiliges Stanzbiegeteil aus Blech gebildeten Haltekörper hergestellt sind. Der Gurtaustrittsschlitz 414 weist dabei einen umgebördeten bzw. abgerundeten Rand auf, der eine Umlenkkante 416 des Gurtaustrittsschlitzes 414 bildet. Durch das Umbörden des eingestanzten Gurtaustrittsschlitzes 414 lässt sich erreichen, dass die Reibung zwischen dem Haltekörper 41 und dem Sicherheitsgurt 1 minimiert ist. Außerdem werden Beschädigungen an dem Sicherheitsgurt 1 vermieden.

In der Figur 2 erkennt man darüber hinaus das obere Umlenkelement 42, das durch einen Stahlstift 421 und eine Umlenkrolle 422 gebildet ist. Der Stahlstift 421 wird entlang seiner Umlenkachse 423 an zwei Haltepunkten 417 des Haltekörpers 41 gehalten. Die Umlenkrolle 422 ist drehbar auf dem Stahlstift 421 gelagert, so dass sich die Umlenkrolle 422 auf dem Stahlstift 421 sehr reibungsarm drehen lässt.

Der Figur 2 lässt sich außerdem entnehmen, dass die Umlenkkante 416 des Gurtaustrittsschlitzes 414 und die Umlenkachse 423 des oberen Umlenkelements 42 einen Winkel α bilden. Der Winkel α kann in einem Bereich zwischen 30° und 70°, beispielsweise auch in einem Bereich zwischen 35° und 55° liegen. Bei dem Ausführungsbeispiel gemäß der Figur 2 beträgt der Winkel ca. 45°.

Der Gurteinführschlitz 413 und die Umlenkachse 423 sind hingegen weitgehend parallel zueinander ausgerichtet.

Der Haltekörper 41 ist - wie bereits erläutert - einstückig ausgeführt; dies bedeutet, dass die beiden Befestigungspunke 411 und 412, die beiden Haltepunkte 417, der Gurteinführschlitz 413 und der Gurtaustrittschlitz 414 einstückig gebildet sind. Der Haltekörper 41 kann beispielsweise durch Stanzen und Biegen eines Bleches, beispielsweise eines Stahlbleches gebildet sein. Alternativ kann der Haltekörper 41 auch durch Spritzgießen aus Kunststoff oder durch Aluminiumdruckguss gebildet werden. Um eine einfache und kostengünstige Herstellung des Haltekörpers zu ermöglichen, ist es lediglich von Vorteil, wenn der Haltekörper einstückig - wie dargestellt - ausgebildet ist.

Bei dem Ausführungsbeispiel gemäß der Figur 2 ist das obere Umlenkelement 42 durch den Stahlstift 421 und die Umlenkrolle 422 gebildet. Alternativ ist es auch denkbar, das obere Umlenkelement 42 durch einen Umlenkstab, durch ein Umlenk-Blechteil oder dergleichen zu bilden. Der Umlenkstab bzw. das Umlenk-Blechteil werden dann vorzugsweise einstückig an dem Haltekörper 41 ausgebildet.

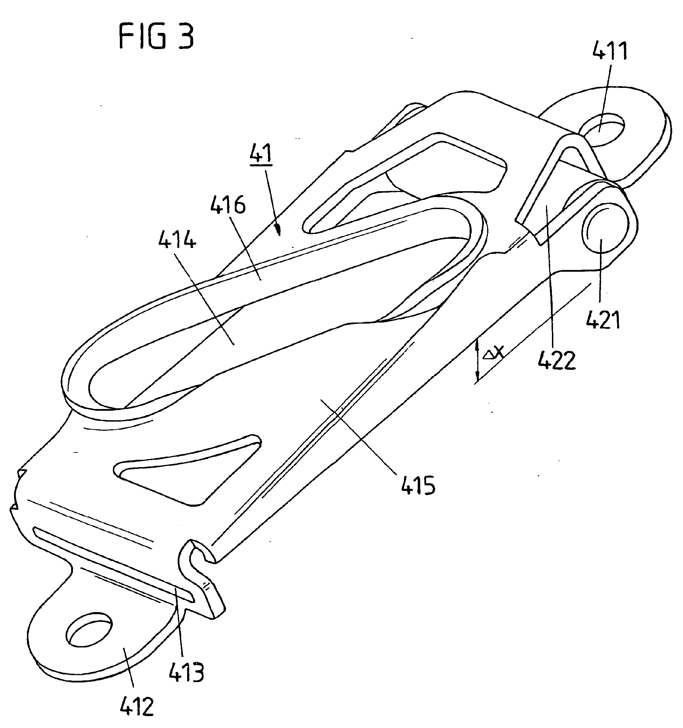

In der Figur 3 ist der Haltekörper 41 gemäß der Figur 2 nochmals im zusammengebauten Zustand gezeigt. Man erkennt die Umlenkrolle 422, die auf dem Stahlstift 421 gelagert ist. Der Stahlstift 421 ist dabei in den beiden Haltepunkten 417 des Haltekörpers 41 fixiert.

### Bezugszeichenliste

- 1: Sicherheitsgurt
- 2: Fahrzeuginsasse
- 3: Gurtroller
- 4: Umlenkeinrichtung
- 5: Gurtschloss
- 8: Karosserie
- 11: Ein Ende des Sicherheitsgurtes
- 12: Anderes Ende des Sicherheitsgurtes
- 41: Haltekörper
- 42: Oberes Umlenkelement
- 81: Boden
- 82: B-Säule
- 411: Oberer Befestigungspunkt
- 412: Unterer Befestigungspunkt
- 413: Gurteinführschlitz
- 414: Gurtaustrittsschlitz
- 415: Mittenbereich des Haltekörpers
- 416: Umlenkkante
- 417: Haltepunkte
- 421: Stahlstift
- 422: Umlenkrolle
- 423: Umlenkachse
- α: Winkel
- Δx: Abstand
- X, y, z: Fahrzeugrichtungen

## Patentansprüche

1. Gurtumlenkeinrichtung (4) für einen Sicherheitsgurt (1) eines Kraftfahrzeugs mit einem einstückigen Haltekörper (41)
- mit mindestens einem Haltepunkt (417), an dem ein Umlenkelement (42), um dessen Umlenkachse (423) der Sicherheitsgurt (1) des Kraftfahrzeugs umgelenkt wird, gehalten ist,
- mit einer durch die Formgebung des Haltekörpers (41) gebildeten Gurt-Umlenkkante (416), um die der Sicherheitsgurt (1) des Kraftfahrzeugs zusätzlich in Richtung Fahrzeuginsasse (2) umgelenkt wird, wobei die Umlenkachse (423) des Umlenkelements und die Umlenkkante (416) einen spitzen Winkel (α) zueinander bilden, und
- mit mindestens einem Befestigungspunkt (411, 412) zur starren Montage des Haltekörpers (41) an einer Karosserie (8) des Kraftfahrzeugs.

2. Gurtumlenkeinrichtung nach Anspruch 1, **dadurch gekennzeichnet, dass** der mindestens eine Befestigungspunkt (411, 412) durch eine Öse, einen Haken oder einen Flansch gebildet ist.

3. Gurtumlenkeinrichtung nach Anspruch 1 oder 2 , **dadurch gekennzeichnet, dass** der einstückige Haltekörper (41) zumindest zwei mit Abstand zueinander angeordnete Befestigungspunkte (411, 412) aufweist, wobei die Befestigungspunkte (411, 412) derart an dem Haltekörper (41) angeformt sind, dass der übrige Bereich (415) des Haltekörpers (41), insbesondere der Mittenbereich (415) zwischen den Befestigungspunkten (411, 412), nach der Montage des Haltekörpers (41) an der Karosserie zumindest teilweise einen vorgegebenen Abstand (Δx) zur Karosserie (8) aufweist.

4. Gurtumlenkeinrichtung nach Anspruch 3, **dadurch gekennzeichnet, dass** der Mittenbereich (415) zwischen den Befestigungspunkten (411, 412) derart ausgestaltet ist, dass er bei Krafteinwirkung von Außen, insbesondere im Falle eines Unfalls, in Richtung Karosserie (8) deformierbar ist.

5. Gurtumlenkeinrichtung nach einem der vorangehenden Ansprüche, **dadurch gekennzeichnet, dass** die durch die Formgebung des Haltekörpers (41) gebildete Gurt-Umlenkkante (416) zumindest in dem mit dem Sicherheitsgurt (1) zusammenwirkenden Bereich abgerundet ist.

6. Gurtumlenkeinrichtung nach Anspruch 5, **dadurch gekennzeichnet, dass** die abgerundete Umlenkkante (416) umgebördelt ist.

7. Gurtumlenkeinrichtung nach einem der vorangehenden Ansprüche, **dadurch gekennzeichnet, dass** die durch die Formgebung des Haltekörpers (41) gebildete Gurt-Umlenkkante (416) durch eine Längskante eines Gurtaustrittsschlitzes (414) des Haltekörpers (41) ausgebildet ist.

8. Gurtumlenkeinrichtung nach Anspruch 7, **dadurch gekennzeichnet, dass** der Gurtaustrittsschlitz (414) zumindest in dem mit dem Sicherheitsgurt (1) zusammenwirkenden Bereich abgerundet, insbesondere umgebördelt ist.

9. Gurtumlenkeinrichtung nach einem der vorangehenden Ansprüche , **dadurch gekennzeichnet, dass** der spitze Winkel (α) zwischen 20° und 70° beträgt.

10. Gurtumlenkeinrichtung nach einem der vorangehenden Ansprüche, **dadurch gekennzeichnet, dass** an dem mindestens einem Haltepunkt (417) des Haltekörpers (41) eine auf einem Stift (421) drehbar gelagerte Umlenkrolle (422) als Umlenkelement (42) befestigt ist.

11. Gurtumlenkeinrichtung nach Anspruch 10, **dadurch gekennzeichnet, dass** der Stift (421) durch einen Metall-Stift, insbesondere einen Stahl-Stift gebildet ist.

12. Gurtumlenkeinrichtung nach einem der vorangehenden Ansprüche 10 oder 11, **dadurch gekennzeichnet, dass** der Stift (421) an zumindest zwei an dem Haltekörper (41) ausgebildeten Haltepunkten (417) gehalten, insbesondere drehbar gelagert ist.

13. Gurtumlenkeinrichtung nach einem der vorangehenden Ansprüche 1 bis 9, **dadurch gekennzeichnet, dass** an dem Haltekörper (41) ein Umlenkstab oder eine weitere Umlenkkante als Umlenkelement einstückig angeformt ist.

14. Gurtumlenkeinrichtung nach einem der vorangehenden Ansprüche, **dadurch gekennzeichnet, dass** der Haltekörper (41) einen Gurt-Einführschlitz (413) aufweist, der parallel zur Umlenkachse (423) des Umlenkelements angeordnet ist.

15. Gurtumlenkeinrichtung nach einem der vorangehenden Ansprüche, **dadurch gekennzeichnet, dass** der einstückige Haltekörper (41) durch ein Stanz-Biegeteil gebildet ist.

16. Gurtumlenkeinrichtung nach Anspruch 15, **dadurch gekennzeichnet, dass** der einstückige Haltekörper (41) durch ein Blechteil gebildet ist, in dessen Mittenbereich (415) der Gurtaustrittsschlitz (414) eingestanzt ist und dessen Befestigungspunkte (411, 412) durch - in Richtung Fahrzeugkarosserie - abgebogene Randbereiche des Blechteils gebildet sind.

17. Gurtumlenkeinrichtung nach einem der vorangehenden Ansprüche , **dadurch gekennzeichnet, dass** der Gurt-Einführschlitz (413) in den einstückigen Haltekörper (41) eingestanzt ist.

18. Gurtumlenkeinrichtung nach einem der vorangehenden Ansprüche , **dadurch gekennzeichnet, dass** der einstückige Haltekörper (41) durch ein Spritzgussteil, beispielsweise ein Kunststoffspritzgussteil, oder ein Metall-Gussteil, beispielsweise ein Aluminium-Gussteil, gebildet ist.

19. Verfahren zum Herstellen einer Gurtumlenkeinrichtung nach einem der vorangehenden Ansprüche, bei dem ein einstückiger Haltekörper (41) durch ein Blechteil gebildet wird, in dem
- in den Mittenbereich (415) des Blechteils ein Gurtaustrittsschlitz (414) eingestanzt wird und/oder
- Befestigungspunkte (411, 412) durch Abbiegen von Randbereichen des Blechteils gebildet werden und/oder
- der Gurt-Einführschlitz (413) in einen einstückigen Haltekörper (41) eingestanzt wird.

## Claims

1. Belt-deflecting device (4) for a seat belt (1) of a motor vehicle, having a single-piece holding body (41)
- having at least one holding point (417) on which a deflecting element (42), about the deflecting axis (423) of which the seat belt (1) of the motor vehicle is deflected, is held,
- having a belt-deflecting edge (416) which is formed by the shaping of the holding body (41) and about which the seat belt (1) of the motor vehicle is additionally deflected in the direction of the vehicle occupant (2), the deflecting axis (423) of the deflecting element and the deflecting edge (416) forming an acute angle (α) with respect to each other, and
- having at least one fastening point (411, 412) for the rigid installation of the holding body (41) on the motor vehicle bodywork (8).

2. Belt-deflecting device according to Claim 1, **characterized in that** the at least one fastening point (411, 412) is formed by an eye, a hook or a flange.

3. Belt-deflecting device according to Claim 1 or 2, **characterized in that** the single-piece holding body (41) has at least two fastening points (411, 412) arranged at a distance from each other, the fastening points (411, 412) being integrally formed on the holding body (41) in such a manner that the remaining region (415) of the holding body (41), in particular the central region (415) between the fastening points (411, 412), is, at least in part, at a predetermined distance (Δx) from the bodywork (8) after the installation of the holding body (41) on the bodywork.

4. Belt-deflecting device according to Claim 3, **characterized in that** the central region (415) between the fastening points (411, 412) is configured in such a manner that upon the application of force from the outside, in particular in the event of an accident, it can be deformed in the direction of the bodywork (8).

5. Belt-deflecting device according to one of the preceding claims, **characterized in that** the belt-deflecting edge (416) formed by the shaping of the holding body (41) is rounded at least in the region which interacts with the seat belt (1).

6. Belt-deflecting device according to Claim 5, **characterized in that** the rounded deflecting edge (416) is crimped.

7. Belt-deflecting device according to one of the preceding claims, **characterized in that** the belt-deflecting edge (416) formed by the shaping of the holding body (41) is formed by a longitudinal edge of a belt outlet slot (414) of the holding body (41).

8. Belt-deflecting device according to Claim 7, **characterized in that** the belt outlet slot (414) is rounded, in particular crimped, at least in the region interacting with the seat belt (1).

9. Belt-deflecting device according to one of the preceding claims, **characterized in that** the acute angle (α) is between 20° and 70°.

10. Belt-deflecting device according to one of the preceding claims, **characterized in that** a deflecting roller (422) mounted rotatably on a pin (421) is fastened as deflecting element (42) to the at least one holding point (417) of the holding body (41).

11. Belt-deflecting device according to Claim 10, **characterized in that** the pin (421) is formed by a metal pin, in particular a steel pin.

12. Belt-deflecting device according to either of the preceding Claims 10 or 11, **characterized in that** the pin (421) is held, in particular mounted rotatably, at at least two holding points (417) formed on the holding body (41).

13. Belt-deflecting device according to one of the preceding Claims 1 to 9, **characterized in that** a deflecting bar or a further deflecting edge is integrally formed as a single piece on the holding body (41) as the deflecting element.

14. Belt-deflecting device according to one of the preceding claims, **characterized in that** the holding body (41) has a belt-introducing slot (413) which is arranged parallel to the deflecting axis (423) of the deflecting element.

15. Belt-deflecting device according to one of the preceding claims, **characterized in that** the single-piece holding body (41) is formed by a punched and bent part.

16. Belt-deflecting device according to Claim 15, **characterized in that** the single-piece holding body (41) is formed by a sheet-metal part, into the central region (415) of which the belt outlet slot (414) is punched and the fastening points (411, 412) of which are formed by edge regions of the sheet-metal part that are bent away - in the direction of the vehicle bodywork.

17. Belt-deflecting device according to one of the preceding claims, **characterized in that** the belt-introducing slot (413) is punched into the single-piece holding body (41).

18. Belt-deflecting device according to one of the preceding claims, **characterized in that** the single-piece holding body (41) is formed by an injection-moulded part, for example a plastic injection-moulded part, or a metal cast part, for example an aluminium cast part.

19. Method for producing a belt-deflecting device according to one of the preceding claims, in which a single-piece holding body (41) is formed by a sheet-metal part, in which
- a belt outlet slot (414) is punched into the central region (415) of the sheet-metal part, and/or
- fastening points (411, 412) are formed by bending away edge regions of the sheet-metal part, and/or
- the belt-introducing slot (413) is punched into a single-piece holding body (41).

## Revendications

1. Dispositif de renvoi (4) pour une ceinture de sécurité (1) d'un véhicule automobile doté d'un organe de retenue (41) d'une seule pièce
- avec au moins un point de retenue (417) auquel est maintenu un élément de renvoi (42), autour de l'axe de renvoi (423) duquel la ceinture de sécurité (1) du véhicule automobile est renvoyée,
- avec un rebord (416) de renvoi de ceinture formé par la conformation de l'organe de retenue (41), la ceinture de sécurité (1) dudit véhicule automobile étant renvoyée autour dudit rebord en direction des passagers du véhicule, l'axe de renvoi (423) de l'élément de renvoi et le rebord de renvoi (416) formant entre eux un angle aigu (α), et
- avec au moins un point de fixation (411, 412) pour le montage rigide de l'organe de retenue (41) sur une carrosserie (8) dudit véhicule automobile.

2. Dispositif de renvoi de ceinture selon la revendication 1, **caractérisé en ce que** l'au moins un point de fixation (411, 412) est formé d'un oeillet, d'un crochet ou d'une bride.

3. Dispositif de renvoi de ceinture selon la revendication 1 ou 2, **caractérisé en ce que** l'organe de retenue (41) d'une seule pièce présente au moins deux points de fixation (411, 412) éloignés l'un de l'autre, les points de fixation (411, 412) étant formés de telle sorte sur l'organe de retenue (41), que la zone restante (415) de l'organe de retenue (41), en particulier la zone centrale (415) entre les points de fixation (411, 412), présente au moins partiellement, après montage de l'organe de retenue (41) sur la carrosserie, un écart prédéfini (Δx) avec la carrosserie (8).

4. Dispositif de renvoi de ceinture selon la revendication 3, **caractérisé en ce que** la zone centrale (415) entre les points de fixation (411, 412), est conçue de telle sorte que lors de l'application de forces extérieures, en particulier en cas d'accident, elle est déformable en direction de la carrosserie (8).

5. Dispositif de renvoi de ceinture selon l'une des revendications précédentes, **caractérisé en ce que** le rebord de renvoi de ceinture (416) formé par la conformation de l'organe de retenue (41) est arrondi au moins dans la zone coopérant avec la ceinture de sécurité (1).

6. Dispositif de renvoi de ceinture selon la revendication 5, **caractérisé en ce que** le rebord de renvoi (416) arrondi est rabattu.

7. Dispositif de renvoi de ceinture selon l'une des revendications précédentes **caractérisé en ce que** le rebord (416) de renvoi de ceinture, formé par la conformation de l'organe de retenue (41), est formé par un rebord long d'une fente (414) de sortie de ceinture de l'organe de retenue (41).

8. Dispositif de renvoi de ceinture selon la revendication 7 **caractérisé en ce que** la fente de sortie (414) de ceinture est arrondie, en particulier rabattue, au moins dans la zone coopérant avec la ceinture de sécurité (1).

9. Dispositif de renvoi de ceinture selon l'une des revendications précédentes **caractérisé en ce que** l'angle aigu (α) est compris entre 20° et 70°.

10. Dispositif de renvoi de ceinture selon l'une des revendications précédentes **caractérisé en ce que** en l'au moins un point de retenue (417) de l'organe de retenue (41), une poulie (422) montée rotative sur une tige (421) est fixée en tant qu'élément de renvoi (42).

11. Dispositif de renvoi de ceinture selon la revendication 10 **caractérisé en ce que** la tige (421) est constituée d'une tige en métal, en particulier une tige d'acier.

12. Dispositif de renvoi de ceinture selon l'une des revendications 10 et 11 **caractérisé en ce que** la tige (421) est logée, en particulier monté rotative, en au moins deux points de retenue (417), formés dans l'organe de retenue (41).

13. Dispositif de renvoi de ceinture selon l'une des revendications 1 à 9 **caractérisé en ce qu'**un barreau de renvoi ou un autre rebord de renvoi faisant office d'élément de renvoi est formé venu de matière avec l'organe de retenue (41).

14. Dispositif de renvoi de ceinture selon l'une des revendications précédentes **caractérisé en ce que** l'organe de retenue (41) présente une fente d'insertion de ceinture (413) qui est disposée parallèle à l'axe de renvoi (423).

15. Dispositif de renvoi de ceinture selon l'une des revendications précédentes **caractérisé en ce que** l'organe de retenue d'une seule pièce (41) est formé d'une pièce pliée estampée.

16. Dispositif de renvoi de ceinture selon la revendication 15 **caractérisé en ce que** l'organe de retenue (41) d'une seule pièce est formé d'une tôle, dans la zone médiane (415) de laquelle, la fente de sortie de ceinture (414) est estampée, et dont les points de fixation (411, 412) sont formés par des zones de rebord de la tôle pliées vers la carrosserie du véhicule.

17. Dispositif de renvoi de ceinture selon l'une des revendications précédentes **caractérisé en ce que** la fente d'insertion de ceinture (413) est estampée dans l'organe de retenue (41) d'une seule pièce.

18. Dispositif de renvoi de ceinture selon l'une des revendications précédentes **caractérisé en ce que** l'organe de retenue (41) d'une seule pièce est constitué d'une pièce moulée par injection, par exemple une pièce en plastique moulée par injection ou une pièce en fonte métallique, par exemple une pièce en fonte d'aluminium.

19. Procédé de fabrication d'un dispositif de renvoi de ceinture de sécurité selon l'une des revendications précédentes, selon lequel un organe de retenue (41) d'une seule pièce est formé dans une tôle, dans lequel
- une fente de sortie (414) pour la ceinture est estampée dans la zone médiane (415) de la tôle et/ou
- des points de fixation (411, 412) sont formés par pliage des zones de bord de la tôle et/ou
- la fente d'insertion de ceinture (413) est estampée dans un organe de retenue (41) d'une seule pièce.
